# EUROPEAN PATENT SPECIFICATION

(11) **EP 2 241 728 B1**
(45) Date of publication and mention of the grant of the patent: **25.03.2015**
(21) Application number: 10160136.7
(22) Date of filing: 16.04.2010
(51) Int. Cl.: F01D 25/12, F02C 7/18, F02C 7/12

(54) **Apparatus and method for cooling a turbine using heat pipes**
Vorrichtung sowie Verfahren zur Kühlung einer Turbine mit Wärmerohren
Appareil et procédé pour refroidissement d'une turbine à l'aide de tubes caloporteurs

(30) Priority: 17.04.2009 US 425416
(43) Date of publication of application: 20.10.2010
(73) Proprietor: General Electric Company, Schenectady, NY 12345 (US)
(72) Inventor: Liu, Yang, Simpsonville, SC 29681 (US); Zhang, Hua, Greer, SC 29650 (US)
(74) Representative: Cleary, Fidelma

(56) References cited:
- EP-A2- 1 736 650
- EP-A2- 2 000 648
- EP-A2- 2 003 311
- GB-A- 2 264 539
- GB-A- 2 389 174
- US-A- 5 267 608
- US-A1- 2006 225 425
- SILVERSTEIN C C: "CAN THE HEAT PIPE MEET GAS TURBINE THERMAL MANAGEMENT CHALLENGES OF THE NEXT CENTURY?", GLOBAL GAS TURBINE NEWS, XX, XX, 1 August 1995 (1995-08-01), pages 4-7, XP000610239,

## Description

### BACKGROUND OF THE INVENTION

The invention is related to systems and methods for cooling the turbine section of a turbine engine. The turbine section of a turbine engine receives extremely hot combustion gases which have been generated in one or more combustors. To help the various components located in the turbine withstand the extremely high temperatures of the combustion gases, it is common to cool various elements within the turbine using cooling air. In some turbine engines, the cooling air used to cool the turbine is taken from the compressor section of the turbine engine.

GB 2264539 describes a method and system for cooling air bled from the compressor of a gas turbine in which the heat removed from the cooling air is returned to the cycle, specifically, via a fluid, such as gas fuel or water, to be injected into the combustion section of the gas turbine.

EP 2003311 describes a hybrid cooling system for a gas turbine engine in which a cooling air cooling assembly is configured to remove thermal energy from cooling air used to cool a first component of the gas turbine engine, while a vapor cooling assembly is configured to transport thermal energy from a vaporization section to a condenser section through cyclical evaporation and condensation of a working medium sealed within the vapor cooling assembly. The vaporization section is located at least partially within a second component of the gas turbine engine, and the condenser section is located outside the second component.

US 2006/225425 describes a gas turbine plant comprising an air compressor, gas turbine including at least one high temperature section, a driven equipment, which are operatively connected in series, a gas turbine combustor arranged between the air compressor and the gas turbine, a fuel system disposed for supplying a fuel to the gas turbine combustor, and a heat exchange section for heating the fuel from the fuel by means of a high pressure air as a heating medium fed from the air compressor.

US 5267608 describes A heat exchanger for use in high speed aircraft propulsion engines provides a plurality of heat pipes wherein the evaporator sections of the heat pipes are disposed in a hot fluid flow conduit and the condenser sections are disposed in a cold fluid flow conduit and the flow conduits are separated by a vented cavity and thin heat transfer fins are disposed around the condenser sections. Another embodiment provides a reactor using the heat exchanger and having a metalized, preferably with platinum, carbon fiber supported catalyst in the form of batting woven between the condenser sections of the heat pipes. The batting has platinum in the form of particles or more preferably in the form of small crystallites, typically about 1 to 5 nanometers in size.

EP 2000648 describes a gas turbine engine with a first heat exchanger associated with a cooling air flow to deliver cooling air to a turbine section and a second heat exchanger associated with a fuel supply line for delivering fuel into a combustion section. An intermediate fluid cools air at the first heat exchanger and heats fuel at the second heat exchanger.

The Document by Silverstein C. C: "Can the Heat Pipe meet Gas Turbine Thermal Management Challenges of the Next Century?", Global Gas Turbine News, 1 August 1995, (1995-08-01), pages 4-7, XP000610239 describes heat pipe cooling techniques for gas turbines.

### BRIEF DESCRIPTION OF THE INVENTION

The invention resides in a heat transfer system for a turbine engine and in a method of cooling a turbine of a turbine engine as defined in the appended claims.

### BRIEF DESCRIPTION OF THE DRAWINGS

There follows a detailed description of embodiments of the invention by way of example only with reference to the accompanying drawings, in which:
FIGURE 1 illustrates the major elements of a turbine engine;
FIGURE 2 illustrates a turbine engine with a cooling system utilizing heat pipes; and
FIGURE 3 illustrates key elements of a system used to remove heat from cooling air that is used to cool a turbine engine.

### DETAILED DESCRIPTION OF THE INVENTION

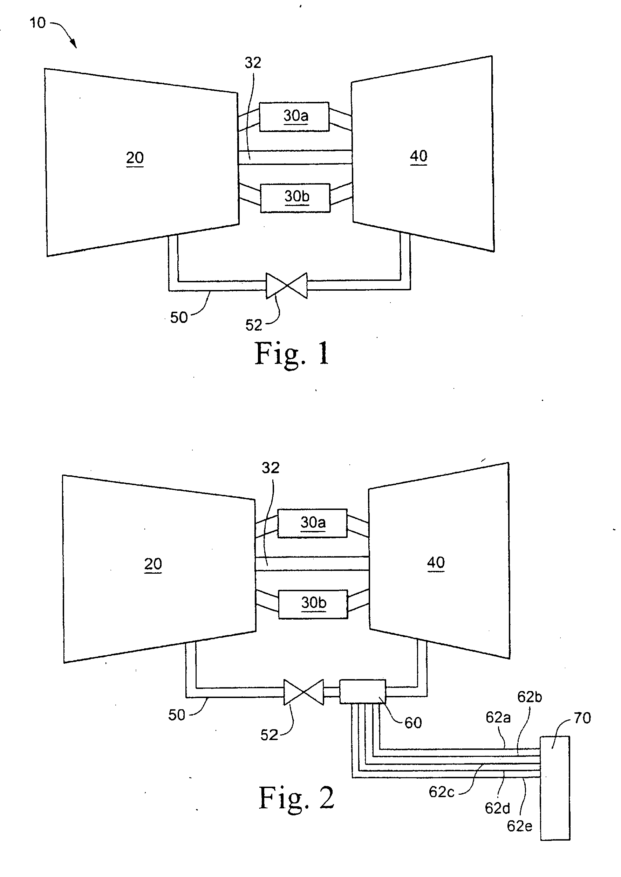

A diagram of the major elements of a turbine engine are illustrated in FIGURE 1. The turbine engine includes a compressor section 20 and a turbine section 40. Rotating elements within the compressor 20 and the turbine 40 are connected to a rotating shaft 32.

Compressed air received from the compressor 20 is combined with fuel in the combustors 30a, 30b and the air fuel mixture is ignited within the combustors. The hot combustion gas created in the combustors 30a, 30b is then provided to the turbine 40.

The hot combustion gases provided to the turbine section 40 flow across nozzles and other hot path components within the turbine. The nozzles direct the hot combustion gases toward the turbine blades at an optimum angle, and the combustion gases cause the turbine blades to rotate the shaft 32 of the turbine engine. The hot combustion gases are at extremely high temperatures, and the high temperature gases tend to cause deterioration of the hot path components within the turbine.

To help the components within the turbine 40 withstand the extremely high temperatures of the hot combustion gases, cooling air is provided to the turbine 40. As shown in FIGURE 1, a cooling air duct 50 takes air from the compressor section 20 and passes it to the turbine section 40. One or more valves 52 may be located in the cooling air duct 50 to control the flow of cooling air from the compressor 20 to the turbine 40.

FIGURE 2 illustrates an embodiment where a plurality of heat pipes 62a, 62b, 62c, 62d, 62e transfer heat from the flow of air passing through the cooling air duct. As shown in FIGURE 2, first ends of the heat pipes receive or remove heat from the flow of air passing through the cooling air duct 50. The heat is then transferred to second ends of the heat pipes. The heat absorbed from the flow of air passing through the cooling duct 50 can then be removed from the second ends of the heat pipes. In some embodiments, the heat can be rejected to ambient air. In other embodiments, the heat removed from the heat pipes could be used for another secondary purpose. For example, it is known to use the heat removed from a flow of cooling air to heat fuel which is burned in the turbine engine, to reheat steam used as part of a power production process, or for other beneficial purposes.

When heat is removed from the flow of air passing through the cooling air duct, the cooling air delivered to the turbine is at a lower temperature, which enhances the cooling effect. This allows the same volume of cooling air to better cool the elements in the turbine. Alternatively, the same degree of cooling of the turbine could be achieved with a lesser volume of air from the compressor if the heat pipes are used to cool the air before it is delivered to the turbine.

As known to those of ordinary skill in the art, a heat pipe typically includes a sealed pipe with a fluid inside. When a first end of the heat pipe is heated, fluid at the first end evaporates and the vapor flows to the second end of the heat pipe. When the vapor flows to the second end of the heat pipe it condenses, which releases the heat which originally caused the fluid to vaporize. This vaporization and condensation process tends to create a continuous flow of the material within the heat pipe, which efficiently transfers heat from the first end of the pipe to the second end of the pipe.

An alternative type of heat pipe, known as an inorganic material coated heat pipe (IMCHP), does not use a fluid/vapor material to transfer heat from one end of the pipe to the other. In an inorganic material coated heat pipe, the inner surfaces of the pipe are coated with a special heat conducting material. Vapor is removed from within the pipe to create a vacuum inside the pipe. The pipe is then permanently sealed. The special heat conducting inorganic material located on the inner surfaces of the heat pipe transfers heat from one end of the pipe to the other. An inorganic material coated heat pipe can provide faster transfer of heat from one end to the other than more traditional heat pipes.

Individual embodiments of the invention could make use of a heat pipe containing a fluid, an inorganic material coated heat pipe, or any other type of thermal management device.

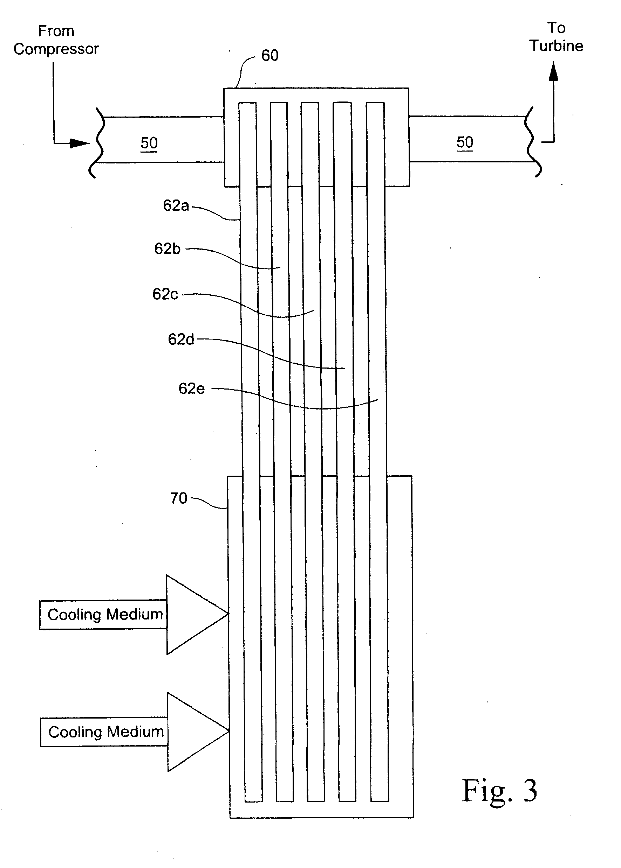

FIGURE 3 illustrates one embodiment of a system that removes heat from a flow of air that is to be provided to the turbine of an engine. As shown in FIGURE 3, a flow of cooling air received from a compressor is communicated through a cooling air duct 50. First ends of the plurality of heat pipes 62a, 62b, 62c, 62d, 62e are mounted so that the flow of air passing through the cooling air duct 50 flows over the first ends of the heat pipes. This allows the first ends of the heat pipes to absorb heat from the flow of air passing through the cooling air duct 50.

In the embodiment shown in FIGURE 3, the second ends of the heat pipes are located in a heat exchanger 70, and a flow of ambient air or some other cooling media passes across the second ends of the heat pipes to remove heat from the second ends of the heat pipes. The flow of coolant passing through the heat exchanger 70 could be ambient air, fuel gas, cooling water, or some other type of media.

In alternate embodiments of the invention, heat could be removed from the second ends of the heat pipes using a different type of heat exchanger 70. For instance a flow of a liquid or a gas through the heat exchanger 70 could also be used to remove heat from the second ends of the heat pipes. In the embodiment according to the present invention, the second ends of the heat pipes are embedded in a solid heat conducting material, and the solid heat conducting material is placed in a liquid or gas flow that serves to remove heat from the second ends of the heat pipes.

Also, as described above, the heat removed from the second ends of the heat pipes could be used for a beneficial purpose. In that instance, the way in which heat is removed from the second ends of the heat pipes could depend on the purpose to which the heat energy is being put. For example, the thermal energy could be used to power an absorption chiller to provide cooling to a building.

In the embodiment illustrated in FIGURE 3, the first ends of the heat pipes are simply shown as being located in the flow of air passing through the cooling air duct 50. In the embodiment according to the present invention a heat exchanger unit 60 is used to transfer heat from the flow of air passing through the cooling air duct 50 into the first ends of the heat pipes. This heat exchanger unit 60 could include a secondary fluid or a secondary gas to facilitate the transfer of heat from the flow of air passing through the cooling duct to the first ends of the heat pipes. In the embodiment according to the present invention, the first ends of the heat H pipes are mounted in a solid heat conducting material, and the solid material is placed in the flow of air passing through the cooling air duct 50.

In still other alternate embodiments not part of the present invention, cooling fins could be arranged on either or both ends of the heat pipes. Cooling fins on the first ends of the heat pipes would facilitate the transfer of heat from the air passing through the cooling air duct into the heat pipes. Likewise, fins on the second ends of the heat pipes would facilitate the transfer of heat out of the heat pipes and into ambient air or some other medium.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the scope of the appended claims.

## Claims

1. A heat transfer system for a turbine engine, comprising:
a cooling air duct (50) connected between a compressor (20) and at least one turbine stage (40) of the turbine engine; and
a first heat transfer unit (60) coupled to the cooling air duct (50);
a plurality of heat pipes (62a-e) having first ends coupled to the first heat transfer unit (60), wherein the heat pipes (62a-e) conduct heat away from a flow of air passing through the cooling air duct (50);
a second heat transfer unit (70) coupled to second ends of the heat pipes (62a-e), wherein a flow of coolant passes through the second heat transfer unit (70), and wherein heat from the flow of air passing through the cooling air duct (50) which is transferred into the first ends of the heat pipes (62a-e) is removed from the second ends of the heat pipes (62a-e) by the flow of coolant passing through the heat transfer unit (70), **characterized in that**
the first heat transfer unit (60) includes a solid heat conducting material placed in the flow of air passing through the cooling air duct (50), the first ends of the plurality of heat pipes (62a-e) being embedded in the solid heat conducting material of the first heat transfer unit (60) and the second heat transfer unit (70) includes a solid heat conducting material placed in the flow of coolant, the second ends of the plurality of heat pipes (62a-e) being embedded in the solid heat conducting material of the second heat transfer unit (70).

2. The heat transfer system of claim 1, wherein the cooling air duct (50) receives a flow of air from the compressor (20) and delivers the flow of air to the at least one turbine stage (40) of the turbine engine to cool the at least one turbine stage (40).

3. The heat transfer system of any of the preceding claims, wherein the flow of coolant passing through the heat transfer unit (70) comprises ambient air.

4. A method of cooling a turbine (40) of a turbine engine, comprising:
removing a flow of air from a compressor (20) of the turbine engine;
passing the flow of air across first ends of a plurality of heat pipes (62a-e) embedded in a solid heat conducting material placed in the flow of air to create a flow of cooled air;
transferring heat from second ends of the plurality of heat pipes (62a-e) to a coolant, the second ends of the plurality of heat pipes (62a-e) being embedded in a solid heat conducting material placed in the flow of coolant; and
cooling the turbine (40) of the turbine engine with the flow of cooled air.

## Patentansprüche

1. Wärmeübertragungssystem für einen Turbinenmotor, umfassend:
eine Kühlluftleitung (50), die zwischen einem Kompressor (20) und wenigstens einer Turbinenstufe (40) des Turbinenmotors verbunden ist; und
eine erste Wärmeübertragungseinheit (60), die mit der Kühlluftleitung (50) verbunden ist;
mehrere Wärmeleitungen (62a-e) mit ersten Enden, die mit der ersten Wärmeübertragungseinheit (60) verbunden sind, wobei die Wärmeleitungen (62a-e) Wärme aus einem die Kühlluftleitung (50) passierenden Luftstrom ableiten;
eine zweite Wärmeübertragungseinheit (70), die mit zweiten Enden der Wärmeleitungen (62a-e) verbunden ist, wobei ein Kühlmittelstrom die zweite Wärmeübertragungseinheit (70) passiert und wobei Wärme aus dem die Kühlluftleitung (50) passierenden Luftstrom, die in die ersten Enden der Wärmeleitungen (62a-e) übertragen wird, durch den die Wärmeübertragungseinheit (70) passierenden Kühlmittelstrom von den zweiten Enden der Wärmeleitungen (62a-e) abgeführt wird, **dadurch gekennzeichnet, dass**
die erste Wärmeübertragungseinheit (60) ein festes wärmeleitendes Material umfasst, das in dem die Kühlluftleitung (50) passierenden Luftstrom angeordnet ist, wobei die ersten Enden der mehreren Wärmeleitungen (62a-e) in das feste wärmeleitende Material der ersten Wärmeübertragungseinheit (60) eingebettet sind, und die zweite Wärmeübertragungseinheit (70) ein festes wärmeleitendes Material umfasst, das in dem Kühlmittelstrom angeordnet ist, wobei die zweiten Enden der mehreren Wärmeleitungen (62a-e) in das feste wärmeleitende Material der zweiten Wärmeübertragungseinheit (70) eingebettet sind.

2. Wärmeübertragungssystem nach Anspruch 1, wobei der Kühlluftleitung (50) ein Luftstrom vom Kompressor (20) zugeführt wird und sie diesen Luftstrom der wenigstens einen Turbinenstufe (40) des Turbinenmotors zuführt, um die wenigstens eine Turbinenstufe (40) zu kühlen.

3. Wärmeübertragungssystem nach einem der vorangehenden Ansprüche, wobei der die Wärmeübertragungseinheit (70) passierende Kühlmittelstrom Umgebungsluft umfasst.

4. Verfahren zum Kühlen einer Turbine (40) eines Turbinenmotors, umfassend:
Entnehmen eines Luftstroms aus einem Kompressor (20) des Turbinenmotors;
Leiten des Luftstroms über erste Enden mehrerer Wärmeleitungen (62a-e), die in ein in dem Luftstrom angeordnetes festes wärmeleitendes Material eingebettet sind, um einen Strom gekühlter Luft zu erzeugen;
Übertragen von Wärme von zweiten Enden der mehreren Wärmeleitungen (62a-e) auf ein Kühlmittel, wobei die zweiten Enden der mehreren Wärmeleitungen (62a-e) in ein in dem Kühlmittelstrom angeordnetes festes wärmeleitendes Material eingebettet sind; und
Kühlen der Turbine (40) des Turbinenmotors mit dem Strom gekühlter Luft.

## Revendications

1. Système de transfert thermique pour un moteur à
turbine, comprenant :
un conduit d'air de refroidissement (50) raccordé entre un compresseur (20) et au moins un étage de turbine (40) du moteur à turbine ; et
une première unité de transfert thermique (60) couplée au conduit d'air de refroidissement (50) ;
une pluralité de tubes caloporteurs (62a-e) ayant des premières extrémités couplées à la première unité de transfert thermique (60), dans lequel les tubes caloporteurs (62a-e) évacuent la chaleur d'un écoulement d'air passant à travers le conduit d'air de refroidissement (50) ;
une seconde unité de transfert thermique (70) couplée aux secondes extrémités des tubes caloporteurs (62a-e), dans lequel un écoulement de réfrigérant passe à travers la seconde unité de transfert thermique (70) et dans lequel la chaleur provenant de l'écoulement d'air passant à travers le conduit d'air de refroidissement (50) et qui est transférée dans les premières extrémités des tubes caloporteurs (62a-e) est éliminée des secondes extrémités des tubes caloporteur (62a-e) par l'écoulement de réfrigérant passant à travers l'unité de transfert thermique (70), **caractérisé en ce que** :
la première unité de transfert thermique (60) comprend un matériau thermoconducteur plein placé dans l'écoulement d'air passant à travers le conduit d'air de refroidissement (50), les premières extrémités de la pluralité de tubes caloporteurs (62a-e) étant imbriquées dans le matériau thermoconducteur plein de la première unité de transfert thermique (60) et la seconde unité de transfert thermique (70) comprend un matériau thermoconducteur plein placé dans l'écoulement de réfrigérant, les secondes extrémités de la pluralité de tubes caloporteurs (62a-e) étant imbriquées dans le matériau thermoconducteur plein de la seconde unité de transfert thermique (70).

2. Système de transfert thermique selon la revendication 1, dans lequel le conduit d'air de refroidissement (50) reçoit un écoulement d'air du compresseur (20) et délivre l'écoulement d'air au au moins un étage de turbine (40) du moteur à turbine pour refroidir le au moins un étage de turbine (40).

3. Système de transfert thermique selon l'une quelconque des revendications précédentes, dans lequel l'écoulement de réfrigérant passant à travers l'unité de transfert thermique (70) comprend de l'air ambiant.

4. Procédé de refroidissement d'une turbine (40) d'un moteur à turbine, comprenant les étapes consistant à :
retirer un écoulement d'air d'un compresseur (20) du moteur à turbine ;
faire passer l'écoulement d'air en travers des premières extrémités d'une pluralité de tubes caloporteurs (62a-e) imbriquées dans un matériau thermoconducteur plein placé dans l'écoulement d'air pour créer un écoulement d'air refroidi ;
transférer la chaleur des secondes extrémités de la pluralité de tubes caloporteurs (62a-e) à un réfrigérant, les secondes extrémités de la pluralité de tubes caloporteurs (62a-e) étant imbriquées dans un matériau thermoconducteur plein placé dans l'écoulement de réfrigérant ; et
refroidir la turbine (40) du moteur à turbine avec l'écoulement d'air refroidi.
